# EUROPÄISCHE PATENTSCHRIFT

(11) **EP 0 681 257 B1**
(45) Veröffentlichungstag und Bekanntmachung des Hinweises auf die Patenterteilung: **16.08.2001**
(21) Anmeldenummer: 95106812.1
(22) Anmeldetag: 05.05.1995
(51) Int. Cl.: G06K 7/10

(54) **Tragbare Identifikationseinrichtung**
Portable identification device
Dispositif d'identification portable

(30) Priorität: 05.05.1994 DE 4415820
(43) Veröffentlichungstag der Anmeldung: 08.11.1995
(73) Patentinhaber: DATALOGIC S.p.A., 40012 Lippo di Calderara di Reno (Bologna) (IT)
(72) Erfinder: Todescato, Pietro, I-40122 Bologna (IT)
(74) Vertreter: Liesegang, Eva

(56) Entgegenhaltungen:
- EP-A- 0 531 645
- WO-A-90/16033
- WO-A-91/00574

## Beschreibung

Die Erfindung betrifft eine tragbare Identifikationseinrichtung zum Identifizieren von mit Identifikationsmerkmalen versehenen Gegenständen gemäß Oberbegriff des Anspruchs 1.

Unter tragbaren Identifikationseinrichtungen der hier angesprochenen Art werden handgehaltene Geräte verstanden, die es erlauben, mit bestimmten Merkmalen versehene Gegenstände zu identifizieren, beispielsweise auf Waren eines Lagers vorhandene Bar-Codes zu lesen und auszuwerten. Es sind Einrichtungen dieser Art bekannt, die eine Übertragung der erfaßten Daten an eine entsprechende Auswertungseinrichtung zulassen. In vielen Fällen ist jedoch die Verwendungsmöglichkeit dieser Einrichtungen nicht flexibel genug. Häufig sind sie auch umständlich zu handhaben.

WO9016033A beschreibt eine Identifikationseinrichtung gemäß dem Oberbegriff des Anspruchs 1. Die Einrichtung besteht aus zwei Teilen, nämlich einem Scannerteil und einem aufgesetzten Terminal, wobei die Datenübertragung zwischen beiden Teilen drahtlos erfolgen kann. WO9100574A beschreibt einen Barcode-Leser mit einem Akustikkoppler zur Datenübertragung über ein Telefon.

Es ist daher Aufgabe der Erfindung, eine Identifikationseinrichtung der hier angesprochenen Art zu schaffen, die sehr kompakt und flexibel einsetzbar ist.

Diese Aufgabe wird mittels einer tragbaren Identifikationseinrichtung gelöst, die die in Anspruch 1 genannten Merkmale aufweist. Dadurch, daß eine Sprachübertragungseinrichtung vorgesehen ist, kann die Bedienungsperson jederzeit gesprochene Informationen an die Datenauswertungsstelle übermitteln, die auch die von der Identifikationseinrichtung gelesenen Daten auswertet. Da die Sprachübertragungseinrichtung in die Identifikationseinrichtung integriert ist, ergibt sich ein besonders kompakter Aufbau. Da die Daten und die Stimme drahtlos übertragen werden, ergibt sich eine besonders hohe Flexibilität bei Einsatz der Identifikationseinrichtung, die eben unabhängig von Energieversorgungs-und Daten-Leitungen funktionsfähig ist.

Bevorzugt wird eine Ausführungsform der Identifikationseinrichtung, bei der Daten, also sowohl Identifikationsdaten als auch Sprachinformationen über ein und denselben Übertragungskanal weitergeleitet werden, so daß auch der konstruktive Aufwand gegenüber herkömmlichen Einrichtungen reduziert ist, so daß sich ein besonders kompakter Aufbau ergibt.

Bevorzugt wird weiterhin eine Ausführungsform der Identifikationseinrichtung, die ein Display aufweist, auf dem graphische und/oder alphanumerische Symbole darstellbar sind. Es kann sich dabei um Angaben über die identifizierten Waren aber auch um Informationen handeln, die von der Datenverarbeitungseinrichtung an die Identifikationseinrichtung übermittelt werden.

Eine weitere bevorzugte Ausführungsform der Identifikationseinrichtung zeichnet sich durch eine Dateneingabeeinrichtung aus, die die zusätzliche Eingabe von Informationen ermöglicht, beispielsweise falls die Identifikationsmerkmale auf den zu erfassenden Gegenständen durch Beschädigung und/oder Verschmutzung unleserlich sind.

Besonders bevorzugt wird eine Ausführungsform der Identifikationseinrichtung, die sich durch einen modularen Aufbau auszeichnet. Dadurch ist es beispielsweise möglich, die Art der Identifikationseinrichtung zu variieren, also außer einem Bar-Code-Lesegerät auch eine Bilderkennungseinrichtung einzusetzen. Auch die Sprachübertragunseinrichtung kann unterschiedlich aufgebaut sein, beispielsweise verschiedene Sprachaufnahme- und/oder -wiedergabeeinrichtungen umfassen.

Weitere Ausgestaltungen ergeben sich aus den übrigen Unteransprüchen. Die Erfindung wird im folgenden anhand einer Zeichnung erläutert. Es zeigen:
- Figur 1: eine schematisierte, perspektivische Draufsicht auf die Identifikationseinrichtung und
- Figur 2: eine schematische Unteransicht dieser Einrichtung.

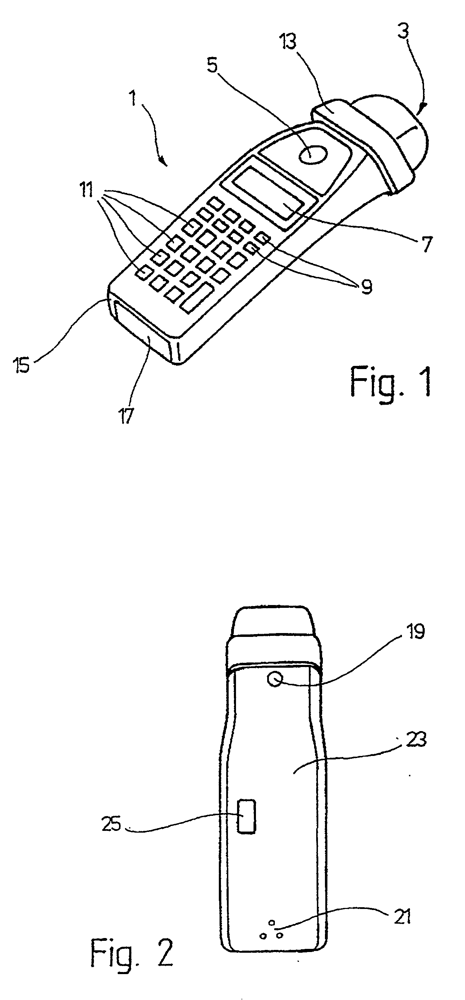

Bei dem in Figur 1 dargestellten Ausführungsbeispiel der Identifikationseinrichtung 1 handelt es sich beispielsweise um ein Bar-Code-Lesegerät, das der Identifikation von in Bar-Codes abgelegten Daten dient. Die Identifikationseinrichtung ist daher mit einem, bei dieser Darstellung nicht sichtbaren beispielsweise für Laserstrahlen durchlässigen Fenster 3 versehen, durch welches Laserstrahlen zur Abtastung der mit dem Bar-Code versehenen Gegenstände abgegeben werden können und durch die von dem Bar-Code reflektierte Lichtstrahlen in das Innere des Gerätes eindringen und ausgewertet werden können.

Auf der Oberseite der Identifikationseinrichtung 1 ist ein Betätigungsknopf 5 vorgesehen, der der Auslösung der Laserstrahl-Abgabe und -Empfangseinrichtung dient. Weiterhin sind zwei Reihen von Funktionsknöpfen 9 vorgesehen, die verschiedene Einstellungsmöglichkeiten erlauben und von denen einer beispielsweise der Ein- und Ausschaltung des Gerätes dient. Darüber hinaus sind auf der Oberseite der Identifikationseinrichtung 1 mehrere Reihen von Eingabeknöpfen 11 erkennbar, die ebenfalls der Eingabe von Informationen und dergleichen dienen, aber auch beispielsweise der Einstellung der Identifikationseinrichtung 1. Außer Zahlen können auch, bei entsprechender Auslegung der Identifikationseinrichtung 1, einige oder alle Buchstaben des Alphabets eingegeben werden. Denkbar ist es, daß auf einem Display 7 eine Bestätigung für einen Tastendruck angezeigt wird.

Nahe dem Fenster 3 ist die Identifikationseinrichtung 1 mit einem Ring 13 umgeben, der vorzugsweise aus elastischem Material besteht und dem Schutz der Einrichtung dient.

An einem dem Fenster 3 gegenüberliegenden Ende 15 der Identifikationseinrichtung 1 ist beispielsweise ein durch einen Deckel 17 verschließbares Fach erkennbar, in welches verschiedene Baugruppen einschiebbar sind, beispielsweise der Energieversorgung des Geräts dienende Batterien oder Akkumulatoren, schließlich auch Adapter für externe Datenund Spracherfassungseinrichtungen oder dergleichen.

Auf der Unterseite 23 der Identifikationseinrichtung 1 ist gemäß Figur 2 eine erste Öffnung 19 zur Wiedergabe von Tonsignalen und eine Gruppe von zweiten Öffnungen 21 erkennbar, die der Aufnahme von Tonsignalen dienen. Die beiden Öffnungen 19 und 21 sind Teil einer Sprachübertragungseinrichtung, die in die Identifikationseinrichtung 1 integriert und im geschlossenen Zustand des Geräts nicht erkennbar ist.

Auch auf der in Figur 2 erkennbaren Unterseite 23 der Identifikationseinrichtung 1 können -hier nicht dargestellt- Tasten oder Knöpfe vorgesehen sein, oder aber beispielsweise ein Sichtfenster 25, das der Datenübertragung dienen kann. Wird beispielsweise die Identifikationseinrichtung 1 auf eine speziell ausgeformte Ablage gelegt, kann das Sichtfenster 25 mit einem entsprechenden Eingangsfenster der Ablage in Deckung gebracht sein, so daß Daten beispielsweise mittels einer Infrarotübertragung gesendet beziehungsweise empfangen werden können.

Im folgenden wird näher auf die Funktion der Identifikationseinrichtung 1 eingegangen: Die Datenübertragungseinrichtung ist in der Lage, digitale Informationen aller Art drahtlos zu übertragen, auch bidirektional. Beispielsweise können Bilder, Nachrichten, Anweisungen oder Programme sowohl der Identifikationseinrichtung 1 als auch von anderen Einrichtungen übertragen werden, außerdem Identifikationsdaten, Tonsignale, strukturierte Daten, beispielsweise Files von Programmen, schließlich auch spezielle Bildsignale, wie Unterschriften.

Durch die integrierte Sprachübertragungseinrichtung ist es möglich, gesprochene Informationen zu übertragen, ebenfalls auch bidirektional.

Eine Adresseinheit ermöglicht es, einen speziellen Empfänger auszuwählen. Dies kann auf beliebige, bekannte Art erfolgen, beispielsweise durch Vorgabe einer speziellen Zahl oder einer Folge alphanumerischer Zeichen.

Die Identifikationseinrichtung 1 kann eine Verschlüsselungseinheit umfassen, die die übertragenen Daten beziehungsweise Worte verschlüsselt und vor unbefugtem Zugriff schützt. Die Verschlüsselungseinheit kann auch als in das durch den Deckel 17 verschließbare Fach einsteckbares Modul ausgebildet sein.

Durch die drahtlose Übertragung von Informationen ist es möglich, daß sich Sender und Empfänger innerhalb des Übertragunsbereichs frei bewegen. Dies ist beispielsweise bei großen Lagerräumen äußerst vorteilhaft, da die Bedienungsperson, die die tragbare, handbetriebene Identifikationseinrichtung 1 benutzt, sich frei, insbesondere ungestört durch Kabelverbindungen, bewegen kann. Dies führt auch zu einem Sicherheitsvorteil, da Unfälle durch hängengebliebene Kabel ausgeschlossen sind.

Es ist ohne weiteres ersichtlich, daß die Datenübertragung auch zu mehreren unabhängigen Empfängern stattfinden kann, die, wie gesagt, gezielt ausgewählt und angesprochen werden können.

Das in die Identifikationseinrichtung 1 integrierte Display 7 erlaubt im Betrieb der Einrichtung die Anzeige von graphischen Symbolen und/oder alphanumerischen Zeichen. Die Bedienungsperson kann beispielsweise sofort erkennen, ob die Identifikationseinrichtung 1 den zu erfassenden Gegenstand korrekt identifiziert hat, ob also die diesen Gegenstand zugeordneten Daten korrekt an einen Empfänger weitergeleitet werden. Es ist denkbar, daß auf dem Display 7 der angesteuerte Empfänger identifiziert wird, beispielsweise durch Anzeige einer zugehörigen Nummer beziehungsweise entsprechender alphanumerischen Zeichen. Die Bedienung der Einrichtung kann durch graphische Symbole erleichtert werden.

Sollte die Bedienungsperson erkennen können, daß der zu erfassende Gegenstand nicht korrekt identifiziert wurde, können die zugehörigen Daten über die Eingabeknöpfe 11 manuell eingegeben werden. Die Bedienungsperson kann also auf die von der Datenübertragungseinrichtung gesendeten Informationen Einfluß nehmen. Die eingegebenen, dem Gegenstand zugeordneten Informationen lassen sich, vor der Absendung an einen Empfänger, auf dem Display 7 prüfen.

Denkbar ist es auch, daß das Display 7 als Touch-Screen ausgebildet ist, also berührungsempfindliche Bereiche aufweist, die ebenfalls der Steuerung der Identifikationseinrichtung 1 oder der Dateneingabe dienen. Ein derartiges Display 7 kann zusätzlich zu den Funktionsknöpfen 9 und Eingabeknöpfen 11 verwendet werden oder diese Knöpfe gänzlich ersetzen.

Die Funktionsknöpfe 9 können der Steuerung sowohl der Datenübertragungseinrichtung als auch der Sprachübertragungseinrichtung dienen. Außerdem können den Eingabeknöpfen 11 mehrere Funktionen zugeordnet werden, also eine Mehrfachbelegung realisiert sein. Auf diese Weise kann die Anzahl der erforderlichen Eingabeknöpfe 11 reduziert werden.

Insgesamt können also in die Identifikationseinrichtung 1 Daten eingegeben werden, die beispielsweise auch der Verarbeitung der aufgenommenen Daten beziehungsweise Stimme dienen. Auch ist es möglich, unter mehreren Empfängern einen bestimmten auszusuchen, also einen gewünschten Empfänger speziell anzusprechen.

Weiterhin können Informationen nicht nur an der Identifikationseinrichtung 1 zugeordnete Empfänger gesendet werden, sondern auch an weitere im Übertragungsbereich liegende Identifikationseinrichtungen.

Allgemein können Daten eingegeben werden, die sowohl von der der Identifikationseinrichtung 1 zugeordneten Datenverarbeitungsanlage, als auch von anderen Identifikationseinrichtungen sowie weiteren Geräten, beispielsweise Druckern oder dergleichen verwendet werden.

Die Eingabeeinrichtung ermöglicht es, insbesondere bei der Verwendung eines Touch-Screen-Displays graphische Symbole aller Art, insbesondere auch Unterschriften, zu erfassen, weiterzuleiten und auf diese Weise auch gegenprüfen zu lassen.

Die Bedienungsperson kann außerdem Befehle an die der Identifikationseinrichtung unmittelbar zugeordneten Datenverarbeitungseinrichtung sowie an andere im Übertragungsbereich der Identifikationseinrichtung 1 liegende Geräte eingeben, außerdem Programme, die in einem -der Identifikationseinrichtung zugeordneten- lokalen oder aber auch in einem - über ein bekanntes Telefon-, Funk- oder Datennetz erreichbaren- überörtlichen Computer verarbeitet werden. Unter lokalen Datenverarbeitungsanlagen/Computern werden Systeme verstanden, die ein lokales, einer Fabrikations- und/oder Lagerstätte zugeordnete Informationsübertragungseinrichtungen verstanden, der mehrere Identifikationseinrichtungen zugeordnet sind. Als überörtliche Systeme werden solche verstanden, die ihrerseits ein oder mehrere lokale Systemversorgungen und über bekannte Daten-/Informationssysteme untereinander verbunden sind.

Schließlich ist es möglich, Verschlüsselungsangaben vorzugeben, die bei der Daten- und Informationsübertragung verwendet werden und einen unbefugten Zugriff vermeiden.

Ganz besonders vorteilhaft ist es, daß gleichzeitig mit der Datenübertragung eine direkte Sprachverbindung hergestellt werden kann, die einen Dialog beispielsweise mit Bedienungspersonen der der Identifikationseinrichtung 1 zugeordneten Datenverarbeitungsanlage aber auch mit Benutzern weiterer Identifikationseinrichtung ermöglicht. Auf diese Weise können auch Zusatzinformationen rasch und komfortabel ausgetauscht werden, was die Bearbeitung einzelner Vorgänge sehr beschleunigt.

Dabei wird der technische Aufwand einerseits in der Identifikationseinrichtung 1 andererseits in den zugehörigen Übertragungs- und Datenverarbeitungseinrichtungen auf ein Minimum beschränkt, da sowohl die Daten- als auch die Sprachübertragungseinrichtung ein und dieselbe Datenübertragungseinrichtung verwenden, den identischen Übertragungskanal, vorzugsweise auch denselben Übertragungsstandard anwenden.

Die Identifikationseinrichtung 1 kann der Eingabe und Verarbeitung von Bildern, Bar-Codes oder sonstiger Identifikationsmerkmale dienen. Beispielsweise können auch Radiofrequenz-Identifizierungseinrichtungen (Radio Frequency Identification Systems) oder sonstige Einrichtungen eingesetzt werden, die der Erkennung optischer Zeichen dienen, die entweder von der Bedienungsperson oder maschinell eingegeben werden (optical-character-recognition-systems). Insbesondere, wenn verschiedene Identifizierungsarten gewünscht sind, ist es vorteilhaft, wenn die Einrichtung modular aufgebaut ist, also verschiedene Module eingesetzt werden können, die die verschiedenen Identifizierungsarten ermöglichen. Die von den Modulen erfaßten und verarbeiteten Daten werden der Datenübertragungseinrichtung zugeführt und von dieser drahtlos weitergeleitet.

Vorzugsweise wird für die drahtlose Daten- und Informationsübertragung ein Funksystem eingesetzt. Denkbar sind jedoch auch Infrarot- und Ultraschall-Systeme, die allerdings eine höhere Störanfälligkeit und geringere Reichweite aufweisen.

Die Identifikationseinrichtung 1 weist außerdem eine integrierte Datenverarbeitungseinrichtung auf, die die bei der Identifikation verschiedener Gegenstände anfallenden Daten erfaßt und auswertet, dazu erforderliche Programme ausführt, auch von der Bedienungsperson eingegebene Programme beziehungsweise Programmschritte oder über die Datenübertragungseinrichtung empfangene Programme/Programmschritte verarbeitet.

Die Identifikationseinrichtung 1 ist darüber hinaus mit einer Speichereinheit versehen, die Daten und Programme, aber auch Sprachsignale speichert, so daß deren Verarbeitung zu jedem gewünschten Zeitpunkt möglich ist. Die gespeicherten Daten und Informationen können bei Bedarf geändert werden, sofern wiederbeschreibbare Speicher verwendet werden. Besonders vorteilhaft ist es, wenn die Speichereinheit so ausgebildet ist, daß auch nach Systemfehlern, beispielsweise bei einem Spannungsausfall, abgelegte Daten weiterhin verfügbar sind. Denkbar ist es auch, daß einer Identifikationseinrichtung 1 zugeordnete Speichereinheiten in der über die drahtlose Kommunikation erreichbare Datenverarbeitungseinheit vorhanden ist, um die Identifikationseinrichtung 1 noch kompakter ausbilden zu können.

Die integrierte Sprachübertragungseinrichtung kann an die Identifikationseinrichtung 1 anschließbare separate Sprachaufzeichnungs- und Wiedergabeeinrichtungen aufweisen, die die Handhabung der Identifikationseinrichtung 1 insofern erleichtern, als die Bedienungsperson diese unmittelbar an die zu erfassenden Gegenstände heranführen kann, dabei Sprachsignale aufnehmen oder eingeben kann, beispielsweise durch ein am Kopf getragenes Mikrophon-und/oder Kopfhörersystem. Damit werden Störungen durch hohe Umgebungsgeräusche auf ein Minimum reduziert, ohne daß der kompakte Aufbau der Einrichtung verloren ginge. Unabhängig von derartigen separaten Kopfhörern beziehungsweise Mikrophonen ist es möglich, die Identifikationseinrichtung 1 quasi als Telefonhörer auszubilden, der einerseits über die erste Öffnung 19 Sprach- aber auch Tonsignale abgibt und andererseits über die zweite Öffnung 21 Sprach- und Tonsignale aufnimmt.

Die Identifikationseinrichtung 1 zeichnet sich also einerseits durch einen überaus kompakten Aufbau aus, ermöglicht aber andererseits eine Kombination mit externen Zusatzgeräten, die gegebenenfalls die Handhabung der Einrichtung unter bestimmten Umständen erleichtern.

Die Zusammenfasssung der für die Daten- und Sprachübertragung erforderlichen Kanäle bewirkt nicht nur einen besonders kompakten Aufbau der Identifikationseinrichtung selbst, sondern auch der mit dieser Einrichtung zusammenwirkenden Empfangsanlage. Diese braucht nur noch für einen Übertragungskanal ausgelegte Antennen- und Empfangseinrichtungen aufzuweisen und kann ebenfalls kompakt und preiswert ausgelegt sein.

Besonders vorteilhaft ist es, wenn die Identifikationseinrichtung 1 modular aufgebaut ist, so daß also verschiedene Identifikationseinrichtungen Verwendung finden können.

Denkbar ist auch der Einsatz verschiedener Displays oder Eingabeeinrichtungen, die in die Identifikationseinrichtung 1 integriert werden. Zusätzliche Bausteine können beispielsweise in dem durch den Deckel 17 verschlossenen Fach untergebracht werden, das mit entsprechenden Kontaktierungseinrichtungen versehen sein muß und den Einschub verschiedenster Module erlaubt. Möglich ist es beispielsweise, unterschiedliche Verschlüsselungsbausteine einzusetzen, verschiedene Module einzufügen, die verschiedenste Eingabemöglichkeiten eröffnen. Wesentlich ist, daß die Datenübertragungseinrichtung und die Sprachübertragungseinrichtung miteinander integriert sind, so daß bei der Identifizierung verschiedenster Gegenstände eine sehr flexible Übertragung von Daten und Informationen gegeben ist, wobei gleichzeitig die Datensicherheit wesentlich erhöht wird, da Rückfragen unmittelbar geklärt werden können. Die Bedienungsperson, die gegebenenfalls in einigem Abstand von der zugehörigen Datenverarbeitungseinrichtung arbeitet, kann laufend mit aktuellen Informationen -gegebenenfalls auch Rückfragen- versorgt werden, wobei eben auch Sprachinformationen übermittelt werden können, ohne daß hierzu zusätzliche Übertragungskanäle zur Verfügung gestellt werden müßten.

Für die Identifikationseinrichtung 1 können verschiedenste Übertragungsstandards verwendet werden, so daß also eine flexible Anpassung an verschiedenste drahtlose übertragungssysteme möglich ist. Dies erlaubt eine sehr flexible Verwendung der Identifikationseinrichtung 1 im Zusammenhang mit verschiedensten Übertragungseinrichtungen, beispielsweise also auch mit Funknetzen, die für tragbare Telefone bereits weitgehend vorliegen und immer weiter ausgebaut werden. Es ist also nicht erforderlich, neue und zusätzliche Datenübertragungseinrichtungen zu erstellen, um die hier beschriebene Identifikationseinrichtung 1 flexibel und unabhängig einsetzen zu können.

## Patentansprüche

1. Tragbare Identifikationseinrichtung (1) zum Erkennen von mit Identifikationsmerkmalen versehenen Gegenständen, mit einer Datenübertragungseinrichtung und einer integrierten Sprachübertragungseinrichtung (19, 21), dadurch **gekennzeichnet,** daß die Datenübertragungseinrichtung zur drahtlosen Übertragung von Daten zwischen der Identifikationseinrichtung (1) und wenigstens einer entfernten Einheit dient, und die Sprachübertragungseinrichtung (19, 21) zur drahtlosen Übertragung von Sprachinformation zwischen der Identifikationseinrichtung (1) und der wenigstens einer entfernten Einheit dient.

2. Identifikationseinrichtung (1) nach Anspruch 1, dadurch **gekennzeichnet,** daß die Sprachübertragungseinrichtung (19, 21) und die Datenübertragungseinrichtung denselben Übertragungskanal verwenden.

3. Identifikationseinrichtung (1) nach Anspruch 1 oder 2, dadurch **gekennzeichnet,** daß die Sprachübertragungseinrichtung (19, 21) und die Datenübertragungseinrichtung denselben Übertragungsstandard verwenden.

4. Identifikationseinrichtung (1) nach einem der vorhergehenden Ansprüche, dadurch **gekennzeichnet,** daß Daten- und/oder Sprachsignale bidirektional übertragbar sind.

5. Identifikationseinrichtung (1) nach einem der vorhergehenden Ansprüche, **gekennzeichnet** durch ein Display (7) zur Darstellung von graphischen und/oder alphanumerischen Zeichen.

6. Identifikationseinrichtung (1) nach einem der vorhergehenden Ansprüche, **gekennzeichnet** durch eine Daten-Eingabeeinrichtung (11).

7. Identifikationseinrichtung (1) nach Anspruch 6, dadurch **gekennzeichnet,** daß die Daten-Eingabeeinrichtung Funktionsknöpfe (9) und/oder Eingabeknöpfe (11) aufweist.

8. Identifikationseinrichtung (1) nach einem der vorhergehenden Ansprüche, dadurch **gekennzeichnet,** daß die Identifikationseinrichtung (1) der Erfassung und/oder Auswertung von Bildern, Bar-Codes, Funksignalen insbesondere solchen zur Radio-Frequenz-Identifikation, Lichtsignalen, Tonsignalen und/oder automatisch erfaßbaren Zeichen dient.

9. Identifikationseinrichtung (1) nach einem der vorhergehenden Ansprüche, **gekennzeichnet** durch eine Daten- und/oder Sprachverarbeitungseinrichtung.

10. Identifikationseinrichtung (1) nach einem der vorhergehenden Ansprüche, **gekennzeichnet** durch einen modularen Aufbau.

11. Identifikationseinrichtung (1) nach einem der vorangehenden Ansprüche, dadurch **gekennzeichnet,** daß sie zur Energieversorgung Batterien aufweist.

12. Identifkationseinrichtung (1) nach einem der vorangehenden Ansprüche, dadurch **gekennzeichnet,** daß die Sprachübertragungseinrichtung (19,21) in geschlossenem Zustand der Identifikationseinrichtung (1) nicht erkennbar ist.

13. Identifikationseinrichtung (1) nach einem der vorangehenden Ansprüche, gekennezeichnet durch eine weitere Datenübertragungseinrichtung (25).

14. Identifikationseinrichtung (1) nach Anspruch 13, dadurch **gekennzeichnet,** daß die weitere Datenübertragungseinrichtung (25) eine Infrarotübertragungsreinrichtung ist.

15. Identifikationseinrichung (1) nach einem der vorangehenden Ansprüche, dadurch **gekennzeichnet,** daß die Datenübertragungseinrichtung dazu geeignet ist, digitale Information jeder Art, wie Bilder, Programme, Dateien, Tonsignale und strukturierte Daten, zu übertragen.

16. Identifikationseinrichtung (1) nach einem der vorangehenden Ansprüche, dadurch **gekennzeichnet,** daß sie dazu geeignet ist, drahtlos empfangene Programme zu verarbeiten.

17. Identifikationseinrichtung (1) nach einem der vorangehenden Ansprüche, **gekennzeichnet** durch eine Addressieieinheit zum Auswählen eines Empfängers durch Eingeben einer numerischen oder alphanumerischen Folge von Zeichen.

18. Identifikationseinrichtung (1) nach Anspruch 17, dadurch **gekennzeichnet,** daß das Display (7) den Empfänger anzeigt.

19. Identifikationseinrichtung (1) nach einem der vorangehenden Ansprüche, **gekennzeichnet** durch eine Verschlüsselungseinheit.

20. Identifikationseinrichtung (1) nach Anspruch 19, dadurch **gekennzeichnet,** daß die Verschlüsselungseinheit verschlüsselte Daten gegen unerlaubten Zugriff schützt.

21. Identifikationseinrichtung (1) nach einem der vorangehenden Ansprüche, **gekennzeichnet** durch eine Spracheingabeeinheit.

22. Identifikationseinrichtung (1) nach einem der vorangehenden Ansprüche, **gekennzeichnet** durch eine Touch-Screen-Eingabeeinheit.

23. Identifikationseinrichtung (1) nach einem der vorangehenden Ansprüche, dadurch **gekennzeichnet,** daß sie dazu geeignet ist, eine Unterschrift einzugeben.

24. Identifikationseinrichtung (1) nach einem der vorangehenden Ansprüche, dadurch **gekennzeichnet,** daß die drahtlose Übertragung von Daten und Sprache mittels Funk erfolgt.

25. Identifikationseinrichtung (1) nach Anspruch 24, dadurch **gekennzeichnet,** daß die Funkübertragung Funknetze für tragbare Telefone nutzt.

26. Die Identifikationseinrichtung nach einem der vorangehenden Ansprüche, **gekennzeichnet** durch eine einzelne Antenne für die Daten- und die Sprachübertragung.

27. Identifikationseinrichtung (1) nach einem der vorangehenden Ansprüche, **gekennzeichnet** durch eine einzelne Empfangseinheit für den Empfang von Daten und Sprache.

28. Identifikationseinrichtung (1) nach einem der vorangehenden Ansprüche, **gekennzeichnet** durch eine Datenverarbeitungseinrichtung.

29. Identifikationseinrichtung (1) nach einem der vorangehenden Ansprüche, **gekennzeichnet** durch eine Speichereinheit.

30. Die Identifikationseinrichtung (1) nach Anspruch 29, dadurch **gekennzeichnet,** daß die Speichereinheit wiederbeschreibbar ist.

31. Identifikationseinrichtung (1) nach einem der vorangehenden Ansprüche, **gekennzeichnet** durch Mittel zum Aufrechterhalten von Daten bei einem Spannungsausfall.

32. Identifikationseinrichtung (1) nach einem der vorangehenden Ansprüche, dadurch **gekennzeichnet,** daß die Sprachübertragungseinrichtung (19,21) an die Identifikationseinrichtung (1) anschließbare separate Sprachaufzeichnungs- und Wiedergabeeinrichtungen aufweist.

33. Identifikationseinrichtung (1) nach einem der vorangehenden Ansprüche, **gekennzeichnet** durch eine Vorrichtung zur optischen Zeichenerkennung.

34. System mit einer Identifikationseinrichtung (1) nach einem der vorangehenden Ansprüche, dadurch **gekennzeichnet,** daß die entfernte Einheit eine Datenaus-wertestelle ist.

35. System nach Anspruch 34, dadurch **gekennzeichnet,** daß die entfernte Einheit eine oder mehrere weitere tragbare Identifikationseinrichtungen umfaßt.

36. System nach Anspruch 34 oder 35, dadurch **gekennzeichnet,** daß die entfernte Einheit eine oder mehrere Empfängerstationen umfaßt.

37. Verfahren zum Erkennen von mit Identifikationsmerkmalen versehenen Gegenständen mit einer tragbaren Identifikationseinrichtung (1) nach einem der vorangehenden Ansprüche 1 to 33, dadurch **gekennzeichnet,** daß
- Daten zwischen der Identifikationseinrichtung und wenigstens einer entfernten Einheit drahtlos übertragbar werden und
- Sprachinformation zwischen der Identifikationseinrichtung und der wenigstens einer entfernten Einheit drahtlos übertragen wird.

## Claims

1. Portable identification means (1) for recognizing objects carrying identification marks, comprising a data communication means and an integrated voice communication means (19, 21), chacacterized in that said data communication means is used for wireless communication of data between said identification means (1) and at least one remote unit; and said voice communication means (19, 21) is used for wireless communication of voice information between said identification means (1) and said at least one remote unit.

2. Identification means (1) according to claim 1 characterized in that said voice communication means (19, 21) and the data communication means share one communication channel.

3. Identification means (1) according to claim 1 or 2 characterized in that said voice communication means (19, 21) and said data communication means use the same communication standard.

4. Identification means (1) according to one of the preceding claims characterized in that data and/or voice signals are communicated bi-directionally.

5. Identification means (1) according to one of the preceding claims characterized by a display (7) for displaying graphical and/or alphanumerical characters.

6. Identification means (1) according to one of the preceding claims characterized by a data input means (11).

7. Identification means (1) according to claim 6 characterized in that said data input means comprises function buttons (9) and/or input buttons (11).

8. Identification means (1) according to one of the preceding claims characterized in that said identification means (1) is used for detecting and/or evaluating images, bar codes, radio signals, in particular for radio frequency identification, light signals, audio signals and/or automatically detected characters.

9. Identification means (1) according to one of the preceding claims, characterized by a data and/or voice processing device.

10. Identification means (1) according to one of the preceding claims, characterized by a modular design.

11. Identification means (1) according to one of the preceding claims, characterized in that it comprises batteries for voltage supply.

12. Identification means (1) according to one of the preceding claims, characterized in that said voice communication means (19, 21) is not visible when the identification means (1) is closed.

13. Identification means (1) according to one of the preceding claims, characterized by a further data communication means (25).

14. Identification means (1) according to claim 16, characterized in that said further data communication means (25) comprises infrared communication means.

15. Identification means (1) according to one of the preceding claims, characterized in that said data communication means is adapted for transmitting digital information of any kind, such as images, programs, files, sound signals, and structured data.

16. Identification means (1) according to one of the preceding claims, characterized in that said it is adapted for processing programs received wireless.

17. Identification means (1) according to one of the preceding claims, characterized by an addressing unit for selecting a receiver by inputting a series of numeric or alphanumeric characters.

18. Identification means (1) according to claim 20, characterized in that said display (7) displays the receiver.

19. Identification means (1) according to one of the preceding claims, characterized by an encryption unit.

20. Identification means (1) according to claim 19, characterized in that said encryption unit protects encoded data against unauthorized access.

21. Identification means (1) according to one of the preceding claims, characterized by a voice input unit.

22. Identification means (1) according to one of the preceding claims, characterized by a touch screen input unit.

23. Identification means (1) according to one of the preceding claims, characterized in that it is adapted for inputting a signature.

24. Identification means (1) according to one of the preceding claims, characterized in that data and voice are communicated via radio transmission.

25. Identification means (1) according to claim 24, characterized in that a radio network for portable telephones is used for said radio transmission.

26. Identification means (1) according to one of the preceding claims, characterized by a single antenna for data and voice communication.

27. Identification means (1) according to one of the preceding claims, characterized by a single receiving unit for receiving data and voice.

28. Identification means (1) according to one of the preceding claims, characterized by a data processing unit.

29. Identification means (1) according to one of the preceding claims, characterized by a memory unit.

30. Identification means (1) according to claim 29, characterized in that the memory unit is rewritable.

31. Identification means according to one of the preceding claims, characterized by means for maintaining data in case of a power failure.

32. Identification means according to one of the preceding claims, characterized in that said voice communication means (19, 21) comprises separate voice recording and reproducing means which can be connected to said identification means (1).

33. Identification means (1) according to one of the preceding claims, characterized by means for optical character recognition.

34. System comprising an identification means (1) according to one of the preceding claims, characterized in that the remote unit is a data evaluation site.

35. System according to claim 34, characterized in that the remote unit comprises one or more portable identification means.

36. System according to claims 34 or 35, characterized in that the remote unit comprises one or more receiving stations.

37. Method of recognizing objects carrying identification marks, using a portable identification means according to one of the preceding claims 1 to 33, characterized by wireless communication of data between said identification means and at least one remote unit; and wireless communication of voice information between said identification means and said at least remote unit.

## Revendications

1. Dispositif portable d'identification (1) pour la reconnaissance d'objets munis de signes d'identification, comportant un dispositif de transmission de données et un dispositif intégré de transmission de parole (19, 21) caractérisé en ce que le dispositif de transmission de données permet la transmission sans fil de données entre le dispositif d'identification (1) et au moins un module éloigné, et en ce que le dispositif de transmission de parole (19, 21) permet la transmission sans fil d'informations de parole entre le dispositif d'identification (1) et le au moins un module éloigné.

2. Dispositif d'identification (1) selon la revendication 1, caractérisé en ce que le dispositif de transmission de parole (19, 21) et le dispositif de transmission de données utilisent le même canal de transmission.

3. Dispositif d'identification (1) selon la revendication 1 ou 2, caractérisé en ce que le dispositif de transmission de parole (19, 21) et le dispositif de transmission de données utilisent le même standard de transmission.

4. Dispositif d'identification (1) selon l'une des revendications précédentes, caractérisé en ce que les signaux de données et/ou de parole sont transmissibles de manière bidirectionnelle.

5. Dispositif d'identification (1) selon l'une des revendications précédentes, caractérisé par un affichage (7) pour la représentation de signes graphiques et/ou alphanumériques.

6. Dispositif d'identification (1) selon l'une des revendications précédentes, caractérisé par un dispositif d'entrée de données (11).

7. Dispositif d'identification (1) selon la revendication 6, caractérisé en ce que le dispositif d'entrée de données présente des boutons de fonctions (9) et/ou des boutons d'entrée (11).

8. Dispositif d'identification (1) selon l'une des revendications précédentes, caractérisé en ce que le dispositif d'identification (1) permet la saisie et/ou l'exploitation d'images, de codes-barre, de signaux radio, en particulier des signaux d'identification de fréquence radio, des signaux lumineux, des signaux de son et/ou des signes pouvant être saisis de manière automatique.

9. Dispositif d'identification (1) selon l'une des revendications précédentes, caractérisé par un dispositif de traitement de données et/ou de parole.

10. Dispositif d'identification (1) selon l'une des revendications précédentes, caractérisé par une structure modulaire.

11. Système comprenant un dispositif d'identification (1) selon l'une des revendications précédentes, caractérisé en ce que le module éloigné est un module d'exploitation de données.

12. Système comprenant un dispositif d'identification (1) selon l'une des revendications précédentes 1 à 10, caractérisé en ce que le module éloigné comprend un ou plusieurs autres dispositifs portables d'identification.

13. Système comprenant un dispositif d'identification (1) selon l'une des revendications précédentes 1 à 10, caractérisé en ce que le module éloigné comprend une ou plusieurs stations de réception.

14. Dispositif d'identification (1) selon l'une des revendications précédentes 1 à 10, caractérisé en ce qu'il comporte des batteries pour l'alimentation en énergie.

15. Dispositif d'identification (1) selon l'une des revendications précédentes 1 à 10, caractérisé en ce que le dispositif de transmission de parole (19, 21) n'est pas perceptible lorsque le dispositif d'identification (1) est en état fermé.

16. Dispositif d'identification (1) selon l'une des revendications précédentes 1 à 10, caractérisé par un dispositif de transmission de données supplémentaire (25).

17. Dispositif d'identification (1) selon la revendication 16, caractérisé en ce que le dispositif de transmission de données supplémentaire (25) est un dispositif de transmission infrarouge.

18. Dispositif d'identification (1) selon l'une des revendications précédentes 1 à 10, caractérisé en ce que le dispositif de transmission de données est propre à transmettre des informations numériques de tout type, comme des images, des programmes, des fichiers de données, des signaux de son et des données structurées.

19. Dispositif d'identification (1) selon l'une des revendications précédentes 1 à 10, caractérisé en ce qu'il est propre à traiter des programmes reçus sans fil.

20. Dispositif d'identification (1) selon l'une des revendications précédentes 1 à 10, caractérisé en ce qu'il comporte un module d'adressage pour choisir un récepteur par l'entrée d'une suite de signes numériques ou alphanumériques.

21. Dispositif d'identification (1) selon la revendication 20, caractérisé en ce que l'affichage (7) indique le récepteur.

22. Dispositif d'identification (1) selon l'une des revendications précédentes 1 à 10, caractérisé par un module de chiffrement.

23. Dispositif d'identification (1) selon la revendication 22, caractérisé en ce que le module de chiffrement protège des données chiffrées d'un accès non autorisé.

24. Dispositif d'identification (1) selon l'une des revendications précédentes 1 à 10, caractérisé par un module d'entrée de parole.

25. Dispositif d'identification (1) selon l'une des revendications précédentes 1 à 10, caractérisé par un module d'entrée de type écran à touches ("Touch-Screen").

26. Dispositif d'identification (1) selon l'une des revendications précédentes 1 à 10, caractérisé en ce qu'il est propre à entrer une signature.

27. Dispositif d'identification (1) selon l'une des revendications précédentes 1 à 10, caractérisé en ce que la transmission sans fil de données et de parole a lieu par voie hertzienne.

28. Dispositif d'identification (1) selon la revendication 27, caractérisé en ce que la transmission par voie hertzienne utilise des réseaux radio pour téléphones portables.

29. Dispositif d'identification selon l'une des revendications précédentes 1 à 10, caractérisé en ce qu'il comprend une antenne unique pour la transmission de données et de parole.

30. Dispositif d'identification (1) selon l'une des revendications précédentes 1 à 10, caractérisé en ce qu'il comprend un module de réception unique pour la réception des données et de parole.

31. Dispositif d'identification (1) selon l'une des revendications précédentes 1 à 10, caractérisé par un dispositif de traitement de données.

32. Dispositif d'identification (1) selon l'une des revendications précédentes 1 à 10, caractérisé par un module de mémorisation.

33. Dispositif d'identification (1) selon la revendication 32, caractérisé en ce que le module de mémorisation peut être réécrit.

34. Dispositif d'identification (1) selon l'une des revendications précédentes 1 à 10, caractérisé en ce qu'il comprend un moyen pour sauvegarder des données en cas de chute de tension.

35. Dispositif d'identification (1) selon l'une des revendications précédentes 1 à 10, caractérisé en ce que le dispositif de transmission de parole (19, 21) comporte des dispositifs d'enregistrement et de restitution de parole séparés pouvant être couplés au dispositif d'identification (1).

36. Dispositif d'identification (1) selon l'une des revendications précédentes 1 à 10, caractérisé par un dispositif de reconnaissance optique de signes.

37. Procédé pour reconnaître des objets munis de signes d'identification avec un dispositif portable d'identification (1) selon une des revendications précédentes 1 à 10, caractérisé en ce que :
- des données peuvent être transmises sans fil entre le dispositif d'identification et au moins un module éloigné, et
- des informations de parole sont transmises sans fil entre le dispositif d'identification et le au moins un module éloigné.
